(19) **Europäisches Patentamt / European Patent Office / Office européen des brevets**

(11) **EP 4 580 040 A1**

(12) **EUROPEAN PATENT APPLICATION**
published in accordance with Art. 153(4) EPC

(43) Date of publication:
**02.07.2025   Bulletin 2025/27**

(21) Application number: **23856298.7**

(22) Date of filing: **30.06.2023**

(51) International Patent Classification (IPC):
$H02P\ 29/028^{(2016.01)}$   $H02P\ 27/06^{(2006.01)}$
$H02M\ 1/088^{(2006.01)}$   $H02P\ 29/024^{(2016.01)}$

(86) International application number:
**PCT/CN2023/104870**

(87) International publication number:
**WO 2024/041208 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022   CN 202211019309**

(71) Applicant: **XPT EDS (Hefei) Co., Ltd.**
**Hefei City, Anhui 230601 (CN)**

(72) Inventors:
• XIA, Zekun
  Hefei, Anhui 230601 (CN)
• LIU, Chang
  Hefei, Anhui 230601 (CN)
• WANG, Kai
  Hefei, Anhui 230601 (CN)

(74) Representative: **Vossius & Partner**
**Patentanwälte Rechtsanwälte mbB**
**Siebertstrasse 3**
**81675 München (DE)**

(54) **FAULT-TOLERANT CONTROL METHOD AND APPARATUS FOR OPEN-CIRCUIT FAULTS OF ALTERNATING-CURRENT MOTOR, AND STORAGE MEDIUM**

(57) The present disclosure relates to the field of motor control, and in particular to a fault-tolerant control method and apparatus for an open-circuit fault in an alternating current motor, a computer device and a computer storage medium. The method comprises: A. constructing a fault-tolerant control optimization model, in consideration of a condition that quadrature-axis current and direct-axis current of a motor change along with a motor rotor electrical angle, wherein the fault-tolerant control optimization model comprises a cost equation generated based on a motor torque equation and a limiting condition consisting of one or more of a fault phase current equation, a motor phase current limiting equation, and a motor phase voltage limiting equation; and B. determining a phase current reference value at a current motor rotor electrical angle by using the fault-tolerant control optimization model.

FIG. 1

**EP 4 580 040 A1**

**Description**

## TECHNICAL FIELD

The present disclosure relates to the field of motor control, and in particular to a fault-tolerant control method and apparatus for an open-circuit fault in an alternating current motor, a computer device and a computer storage medium.

## BACKGROUND

Electric drive systems used in the field of vehicles often have high safety and reliability requirements. Currently, a common strategy for dealing with an open-circuit fault in a three-phase alternating current motor inverter is to modify the topological structure of a three-phase full bridge inverter. For example, a spare phase bridge arm is added to a three-phase full bridge inverter, or the neutral point of a three-phase winding is connected via a bidirectional thyristor to the middle of two voltage-dividing capacitors on the direct-current side, or the neutral point of a three-phase winding of a motor is open, and two sets of three-phase full bridge inverters are used to drive in an open winding configuration. While this type of strategy can achieve fault-tolerant control, the hardware circuit structure needs to be modified, thus making it not directly applicable to existing three-phase alternating current motor drive system products. Moreover, changes to the hardware circuit also means increasing costs and system complexity.

There are fewer fault-tolerant strategies for dealing with an open-circuit fault in a three-phase inverter without changing the hardware circuit structure of the motor and the inverter. Some existing technologies achieve fault-tolerant control by modifying the action duration of each voltage vector in space vector pulse-width-modulation (SVPWM). However, the actual torque control effect of this method is not good, and the applicable speed range of this method may be limited as a current reference under fault is not adjusted. Some existing technologies perform fault-tolerant control by reconstructing a motor model in a fault state, along with using a model prediction method. However, such control strategy is not only complex but also has lower control accuracy. Some other existing technologies perform fault-tolerant control of a motor by taking a current reference of a fault phase as a second harmonic wave form of a normal phase current. However, such second harmonic wave form of the phase current limits the torque output capability under fault, and cannot be applied to a high-speed weak magnetic zone of a motor. In addition, motor phase current peak values in some fault-tolerant strategies are larger, which will increase system copper consumption, reduce efficiency, and may affect the stability of the control system.

## SUMMARY

In order to solve or at least alleviate one or more of the aforementioned problems, the present disclosure proposes a fault-tolerant control method and apparatus for an open-circuit fault in an alternating current motor, a computer device and a computer storage medium, to improve the reliability of an electric drive system and reduce motor torque loss caused by the fault.

According to a first aspect of the present disclosure, there is provided a fault-tolerant control method for an open-circuit fault in an alternating current motor. The alternating current motor is driven by an inverter. The method comprises the following steps: A. constructing a fault-tolerant control optimization model, in consideration of a condition that quadrature-axis current and direct-axis current of a motor change along with a motor rotor electrical angle, wherein the fault-tolerant control optimization model comprises a cost equation generated based on a motor torque equation and a limiting condition consisting of one or more of a fault phase current equation, a motor phase current limiting equation, and a motor phase voltage limiting equation; and B. determining a phase current reference value at a current motor rotor electrical angle by using the fault-tolerant control optimization model.

As an alternative or addition to the above solution, the method according to an embodiment of the present disclosure further comprises: C. determining, based on fault state information of the alternating current motor and the inverter driving the alternating current motor, a fault phase and an open-circuit fault type of the alternating current motor, wherein the open-circuit fault type comprises a first fault type and a second fault type.

As an alternative or addition to the above solution, in the method according to an embodiment of the present disclosure, in step C, it is determined that the open-circuit fault type is the first fault type, in response to the fault state information indicating that the inverter has an open-circuit fault, and the inverter and windings of the alternating current motor as a whole only have a single-phase open-circuit fault, and a fault-phase bridge arm of the inverter satisfies one of the following conditions: the open-circuit fault occurs simultaneously in two switching elements of upper and lower bridge arms; the open-circuit fault occurs simultaneously in two diodes of upper and lower bridge arms; the open-circuit fault occurs simultaneously in a switching element and a diode of an upper bridge arm; the open-circuit fault occurs simultaneously in a switching element and a diode of a lower bridge arm; and a total number of switching elements and diodes in which the open-circuit fault occurs is more than two.

As an alternative or addition to the above solution, in the method according to an embodiment of the present disclosure, in step C, it is determined that the open-circuit fault type is the first fault type, in response to the fault state information indicating that windings of the alternating current motor has an open-circuit fault, and the inverter and the windings of the alternating current motor as a whole only have a single-phase open-circuit fault.

As an alternative or addition to the above solution, in the method according to an embodiment of the present disclosure, in step C, it is determined that the open-circuit fault type is the second fault type, in response to the fault state information indicating that windings of the alternating current motor has no fault, and only a single-phase bridge arm of the inverter has an open-circuit fault and satisfies one of the following conditions: a total number of switching elements and diodes in which the open-circuit fault occurs is one; the open-circuit fault occurs simultaneously in a switching element of an upper bridge arm and a diode of a lower bridge arm; and the open-circuit fault occurs simultaneously in a switching element of a lower bridge arm and a diode of an upper bridge arm.

As an alternative or addition to the above solution, in the method according to an embodiment of the present disclosure, if the alternating current motor is a permanent magnet synchronous motor and the inverter is a three-phase full bridge inverter, the cost equation is a first cost equation $J_1$ or a second cost equation $J_2$, wherein

$$J_1 = \left(T_{ref} - \frac{3}{2}N_p i_q(\theta_e)\left[\lambda_m + i_d(\theta_e)\left(L_d - L_q\right)\right]\right)^2$$

$$J_2 = \frac{\left(T_{ref} - \frac{3}{2}N_p i_q(\theta_e)\left[\lambda_m + i_d(\theta_e)\left(L_d - L_q\right)\right]\right)^2}{T_{ref}^2} + \rho\frac{\left(i_d^2(\theta_e) + i_q^2(\theta_e)\right)}{i_{max}^2}$$

wherein $T_{ref}$ denotes a torque reference value, $N_p$ denotes a number of pole pairs of the motor, $\theta_e$ denotes a motor rotor electrical angle, $i_d$ denotes a direct-axis current and is a function of $\theta_e$, $i_q$ denotes a quadrature-axis current and is a function of $\theta_e$, $\lambda_m$ denotes a flux linkage of a permanent magnet, $L_d$ denotes a direct-axis inductance, $L_q$ denotes a quadrature-axis inductance, $i_{max}$ denotes a maximum limit value of a phase current, $\rho$ denotes a penalty coefficient and depends on motor operating efficiency.

As an alternative or addition to the above solution, in the method according to an embodiment of the present disclosure, step A further comprises: A1. generating a first algorithm model based on the cost equation and a limiting condition consisting of the fault phase current equation; A2. generating a second algorithm model based on a limiting condition consisting of the fault phase current equation and the motor phase current limiting equation; and A3. generating a third algorithm model based on a limiting condition consisting of the fault phase current equation and the motor phase voltage limiting equation.

As an alternative or addition to the above solution, in the method according to an embodiment of the present disclosure, if the alternating current motor is a permanent magnet synchronous motor and the inverter is a three-phase full bridge inverter, the first algorithm model satisfies the following equation:

$$\begin{cases} i_d(\theta_e)\cos(\theta_e + \theta_1) - i_q(\theta_e)\sin(\theta_e + \theta_1) = 0 \\ \left(T_{ref} - \frac{3}{2}N_p i_q(\theta_e)\left[\lambda_m + i_d(\theta_e)\left(L_d - L_q\right)\right]\right)^2 = 0 \end{cases}$$

wherein $\theta_e$ denotes a motor rotor electrical angle, $i_d$ denotes a direct-axis current and is a function of $\theta_e$, $i_q$ denotes a quadrature-axis current and is a function of $\theta_e$, $T_{ref}$ denotes a torque reference value, $N_p$ denotes a number of pole pairs of the motor, $\lambda_m$ denotes a flux linkage of a permanent magnet, $L_d$ denotes a direct-axis inductance, $L_q$ denotes a quadrature-axis inductance, $\theta_1$ is a preset value and depends on a fault phase.

As an alternative or addition to the above solution, in the method according to an embodiment of the present disclosure, if the alternating current motor is a permanent magnet synchronous motor and the inverter is a three-phase full bridge inverter, the first algorithm model satisfies the following equation:

$$\begin{cases} i_d(\theta_e)\cos(\theta_e + \theta_1) - i_q(\theta_e)\sin(\theta_e + \theta_1) = 0 \\ \dfrac{\left(T_{ref} - \dfrac{3}{2}N_p i_q(\theta_e)\left[\lambda_m + i_d(\theta_e)(L_d - L_q)\right]\right)^2}{T_{ref}^2} + \rho\,\dfrac{\left(i_d^2(\theta_e) + i_q^2(\theta_e)\right)}{i_{max}^2} = 0 \end{cases}$$

wherein $\theta_e$ denotes a motor rotor electrical angle, $i_d$ denotes a direct-axis current and is a function of $\theta_e$, $i_q$ denotes a quadrature-axis current and is a function of $\theta_e$, $T_{ref}$ denotes a torque reference value, $N_p$ denotes a number of pole pairs of the motor, $\lambda_m$ denotes a flux linkage of a permanent magnet, $L_d$ denotes a direct-axis inductance, $L_q$ denotes a quadrature-axis inductance, $\theta_1$ is a preset value and depends on a fault phase, $i_{max}$ denotes a maximum limit value of a phase current, $\rho$ denotes a penalty coefficient and depends on motor operating efficiency.

As an alternative or addition to the above solution, in the method according to an embodiment of the present disclosure, step B comprises: B1. obtaining a current motor speed, torque reference value, motor rotor electrical angle, and maximum limit values of a phase voltage and a phase current; B2. determining, based on the open-circuit fault type, a range of the rotor electrical angle for fault-tolerant control; and B3. determining, based on the current motor speed, torque reference value, motor rotor electrical angle, and maximum limit values of a phase voltage and a phase current, a phase current reference value at a current motor rotor electrical angle by using the fault-tolerant control optimization model, within the range of the rotor electrical angle for fault-tolerant control.

As an alternative or addition to the above solution, in the method according to an embodiment of the present disclosure, step B2 comprises: in response to the open-circuit fault type being determined as the first fault type, determining the range of the motor rotor electrical angle for fault-tolerant control as an entire cycle of the rotor electrical angle; and in response to the open-circuit fault type being determined as the second fault type, determining the range of the motor rotor electrical angle for fault-tolerant control as half a cycle of the rotor electrical angle or an entire cycle of the rotor electrical angle.

As an alternative or addition to the above solution, in the method according to an embodiment of the present disclosure, step B3 comprises: determining, based on the torque reference value and the motor rotor electrical angle, a first phase current reference value using a first algorithm model; in response to a current amplitude under the first phase current reference value is less than or equal to the maximum limit value of the phase current, and a voltage amplitude is less than or equal to the maximum limit value of the phase voltage, determining the first phase current reference value as the current phase current reference value; in response to a current amplitude under the first phase current reference value is greater than the maximum limit value of the phase current, and a voltage amplitude is less than or equal to the maximum limit value of the phase voltage, determining the current phase current reference value using a second algorithm model; and in response to the voltage amplitude being greater than the maximum limit value of the phase voltage, determining the current phase current reference value using a third algorithm model.

As an alternative or addition to the above solution, the method according to an embodiment of the present disclosure further comprises one or more of the following steps: D. controlling the alternating current motor according to the determined phase current reference value, within a range of the rotor electrical angle for fault-tolerant control; and E. in response to the open-circuit fault type being determined as the second fault type and the range of the rotor electrical angle for fault-tolerant control is half a cycle of the rotor electrical angle, controlling the alternating current motor according to the phase current reference value obtained under a non-fault state control strategy, within the other half cycle of the rotor electrical angle.

According to a second aspect of the present disclosure, there is provided a fault-tolerant control apparatus for an open-circuit fault in an alternating current motor. The alternating current motor is driven by an inverter. The fault-tolerant control apparatus comprises: a model establishment module configured to construct a fault-tolerant control optimization model, in consideration of a condition that quadrature-axis current and direct-axis current of a motor change along with a motor rotor electrical angle, wherein the fault-tolerant control optimization model comprises a cost equation generated based on a motor torque equation and a limiting condition consisting of one or more of a fault phase current equation, a motor phase current limiting equation, and a motor phase voltage limiting equation; and a current determination module configured to determine a phase current reference value at a current motor rotor electrical angle by using the fault-tolerant control optimization model.

As an alternative or addition to the above solution, the apparatus according to an embodiment of the present disclosure further comprises: a fault determination module configured to determine, based on fault state information of the alternating current motor and the inverter for driving the alternating current motor, a fault phase and an open-circuit fault type of the alternating current motor, wherein the open-circuit fault type comprises a first fault type and a second fault type.

According to a third aspect of the present disclosure, there is provided a computer device, comprising: a memory; a processor; and a computer program stored on the memory and executable on the processor, wherein the computer program is executed to enable any one of the methods according to the first aspect of the present disclosure to be performed.

According to a fourth aspect of the present disclosure, there is provided a computer storage medium comprising instructions, wherein when the instructions are run, any one of the methods according to the first aspect of the present disclosure is performed.

The fault-tolerant control solution for an open-circuit fault in an alternating current motor according to the present disclosure can be directly applied to existing alternating current motor drive system products (i.e., standard three-phase full bridge inverters and three-phase alternating current motors) without changing any hardware circuit or structure of the electric drive system and without adding additional devices, thereby reducing the fault-tolerant control cost of the system, and also improving the iterability of the fault-tolerant control solution at the same time (for example, this functionality can be configured for old products through software installation, and this functionality can also be continuously upgraded through software updates).

The fault-tolerant control solution for an open-circuit fault in an alternating current motor according to some embodiments of the present disclosure can also make full use of the remaining healthy power components to implement fault-tolerant control, thereby improving the reliability of the electric drive system, and also improving the torque output capability under a motor open-circuit fault and reducing the motor torque loss caused by the fault at the same time. This is suitable for the full speed range of the electric drive system.

The fault-tolerant control solution for an open-circuit fault in an alternating current motor according to some embodiments of the present disclosure can also reduce the current peak value and effective value under fault, while meeting the torque output of the faulty motor, and reduce copper consumption of the electric drive system, thereby improving the system efficiency and stability.

The fault-tolerant control solution for an open-circuit fault in an alternating current motor according to some embodiments of the present disclosure can also reduce motor torque fluctuations and avoid the generation of unexpected reverse torque when the motor is in a fault state. For example, when the reference torque value is positive, no negative torque is generated; when the reference torque value is negative, no positive torque is generated.

## BRIEF DESCRIPTION OF THE DRAWINGS

The above-mentioned and/or other aspects and advantages of the present disclosure will become clearer and more readily appreciated from the following description in various aspects in conjunction with the drawings, in which the same or similar units are denoted by the same reference numerals. In the drawings:

FIG. 1 is a flowchart of a fault-tolerant control method 10 for an open-circuit fault in an alternating current motor according to one or more embodiments of the present disclosure;

FIG. 2 is a diagram of a topological circuit of a three-phase full bridge inverter for driving a three-phase alternating current motor according to one or more embodiments of the present disclosure;

FIG. 3 is a block diagram of a fault-tolerant control apparatus 30 for an open-circuit fault in an alternating current motor according to one or more embodiments of the present disclosure; and

FIG. 4 is a block diagram of a computer device 40 according to one or more embodiments of the present disclosure.

## DETAILED DESCRIPTION OF EMBODIMENTS

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background, or the following Detailed Description.

In the following detailed descriptions of the embodiments, many specific details are set forth to provide a more thorough understanding of the disclosed technologies. However, it is obvious for those skilled in the art that the disclosed technologies can be practiced without these specific details. In other instances, well-known features are not detailed, to avoid complicating the descriptions unnecessarily.

The terms such as "include" and "comprise" are used to indicate that in addition to the units and steps that are directly and clearly described herein, other units and steps that are not directly or clearly described are not excluded in the technical solutions of the present disclosure. The terms such as "first" and "second" are not used to indicate sequences of units in terms of time, space, size, etc., and are merely used to distinguish between the units.

Electric drive systems used in the field of vehicles often have high safety and reliability requirements. In order to ensure that a vehicle can work stably for a long time when a fault occurs, the electric drive system often needs to have good fault tolerance. As mentioned above, existing fault-tolerant control solutions usually require changes to the hardware circuit structure of the motor and the inverter, or generally have shortcomings such as limited speed range, complex control strategies, low control precision, and limited torque output capability. In this regard, the present disclosure proposes a fault-tolerant control solution for an open-circuit fault in an alternating current motor, seeking to improve the reliability of the electric drive system and reduce motor torque loss, without changing the hardware structure of the motor and inverter and without adding additional devices.

Various exemplary embodiments according to the present disclosure will be described hereinafter in detail with reference to the drawings.

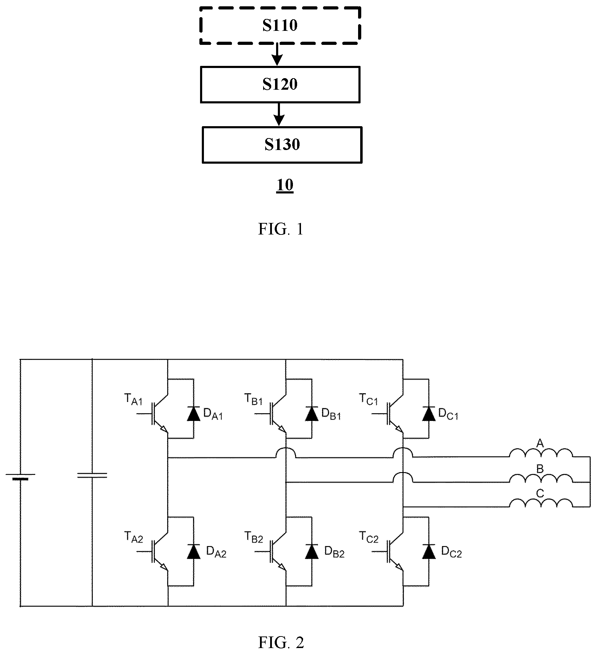

FIG. 1 is a flowchart of a fault-tolerant control method 10 for an open-circuit fault in an alternating current motor according to one or more embodiments of the present disclosure.

As shown in FIG. 1, optionally, in step S110, a fault phase and an open-circuit fault type of the alternating current motor are determined, based on fault state information of the inverter and windings of the alternating current motor. Exemplarily, the fault state information can indicate whether there is an open-circuit fault in various phase windings of the alternating current motor and in various power devices (for example, a switching element and a diode) in the inverter for driving the alternating current motor. It is to be noted that a diagnosis method for the fault state information may be based on a diagnosis method known in the art, which is not specifically limited in the present disclosure.

Exemplarily, the above alternating current motor may be a three-phase alternating current motor, such as a permanent magnet synchronous motor, an asynchronous motor, and a synchronous reluctance motor. Correspondingly, the above inverter may be a three-phase full bridge inverter commonly used in the field of motor control. The fault-tolerant control solution is explained in detail hereinafter using the three-phase alternating current motor and the three-phase full bridge inverter as examples. It is to be noted that the fault-tolerant control solution according to the present disclosure can be applied to other types of alternating current motors (for example, a five-phase alternating current motor) and other types of inverters based on the same or similar principles. The presented examples and implementations should be deemed as illustrative rather than restrictive.

FIG. 2 is a diagram of a topological circuit of a three-phase full bridge inverter for driving a three-phase alternating current motor according to one or more embodiments of the present disclosure. As shown in FIG. 2, the three-phase full bridge inverter includes three bridge arms. Each bridge arm may be divided into an upper bridge arm and a lower bridge arm, wherein each of the upper bridge arm and the lower bridge arm includes one switching element and one diode. An A-phase winding of the three-phase motor is connected to switching elements $T_{A1}$ and $T_{A2}$ and diodes $D_{A1}$ and $D_{A2}$, a B-phase winding of the three-phase motor is connected to switching elements $T_{B1}$ and $T_{B2}$ and diodes $D_{B1}$ and $D_{B2}$, and a C-phase winding of the three-phase motor is connected to switching elements $T_{C1}$ and $T_{C2}$ and diodes $D_{C1}$ and $D_{C2}$. Under normal circumstances, the fault probability of an inverter (for example, a switching element and a diode) in an electric drive system will be much higher than that of windings of an alternating current motor. For a three-phase full bridge inverter, open-circuit faults of switching elements caused by detached bonding wires or driver chip failures are quite common. Exemplarily, the open-circuit fault can be categorized into two types, i.e., a first fault type and a second fault type.

Optionally, it is determined that the open-circuit fault type is the first fault type, in response to the fault state information indicating that the inverter has an open-circuit fault, and the inverter and windings of the alternating current motor as a whole only have a single-phase open-circuit fault (for example, only the A-phase bridge arm of the inverter has an open-circuit fault, or the A-phase winding of the motor and the A-phase bridge arm of the inverter have the open-circuit fault at the same time), and wherein a fault-phase bridge arm of the inverter satisfies one of the following conditions: the open-circuit fault occurs simultaneously in two switching elements of upper and lower bridge arms (for example, $T_{A1}$ and $T_{A2}$); the open-circuit fault occurs simultaneously in two diodes of upper and lower bridge arms (for example, $D_{A1}$ and $D_{A2}$); the open-circuit fault occurs simultaneously in a switching element and a diode of an upper bridge arm (for example, $T_{A1}$ and $D_{A1}$); the open-circuit fault occurs simultaneously in a switching element and a diode of a lower bridge arm (for example, $T_{A2}$ and $D_{A2}$); and a total number of switching elements and diodes in which the open-circuit fault occurs in a single-phase bridge arm is more than two (for example, a total number of the devices $T_{A1}$, $T_{A2}$, $D_{A1}$ and $D_{A2}$ in which the open-circuit fault occurs is more than two).

Optionally, it is determined that the open-circuit fault type is the first fault type, in response to the fault state information indicating that windings of the alternating current motor has an open-circuit fault, and the inverter and the windings of the alternating current motor as a whole only have a single-phase open-circuit fault (for example, only the A-phase winding of the motor has an open-circuit fault, or the A-phase winding of the motor and the A-phase bridge arm of the inverter have the open-circuit fault at the same time).

Optionally, it is determined that the open-circuit fault type is the second fault type, in response to the fault state information indicating that windings of the alternating current motor has no fault, and only a single-phase bridge arm has an open-circuit fault (for example, all switching elements and diodes of the B- and C-phase bridge arms are working properly, and only the A-phase bridge arm has an open-circuit fault) and satisfies one of the following conditions: a total number of switching elements and diodes in which the open-circuit fault occurs is one (for example, the open-circuit fault occurs only in an switching element of an upper bridge arm $T_{A1}$, the open-circuit fault occurs only in a switching element of a lower bridge arm $T_{A2}$, the open-circuit fault occurs only in a diode of an upper bridge arm $D_{A1}$, or the open-circuit fault occurs only in a diode of a lower bridge arm $D_{A2}$); the open-circuit fault occurs simultaneously in a switching element of an upper bridge arm and a diode of a lower bridge arm (for example, $T_{A1}$ and $D_{A2}$); and the open-circuit fault occurs simultaneously in a switching element of a lower bridge arm and a diode of an upper bridge arm (for example, $T_{A2}$ and $D_{A1}$).

In step S120, a fault-tolerant control optimization model is constructed, in consideration of a condition that quadrature-axis current and direct-axis current of a motor change along with a motor rotor electrical angle, wherein the fault-tolerant control optimization model comprises a cost equation generated based on a motor torque equation and a limiting condition consisting of one or more of a fault phase current equation, a motor phase current limiting equation, and a motor phase voltage limiting equation. The step of constructing the fault-tolerant control optimization model is explained in detail hereinafter using a three-phase permanent magnet synchronous motor as an example.

Optionally, the cost equation for constructing the fault-tolerant control optimization model can be a first cost equation $J_1$ generated based on a motor torque equation, or a second cost equation $J_2$ generated taking into account the motor operating efficiency. In one example, the first cost equation $J_1$ and the second cost equation $J_2$ satisfy the following equations:

$$J_1 = \left( T_{ref} - \frac{3}{2} N_p i_q(\theta_e) [\lambda_m + i_d(\theta_e)(L_d - L_q)] \right)^2 \qquad \text{(Equation 1)}$$

$$J_2 = \frac{\left( T_{ref} - \frac{3}{2} N_p i_q(\theta_e) [\lambda_m + i_d(\theta_e)(L_d - L_q)] \right)^2}{T_{ref}^2} + \rho \frac{\left( i_d^2(\theta_e) + i_q^2(\theta_e) \right)}{i_{max}^2} \qquad \text{(Equation 2)}$$

wherein $T_{ref}$ denotes a torque reference value, $N_p$ denotes a number of pole pairs of the motor, $\theta_e$ denotes a motor rotor electrical angle, $i_d$ denotes a direct-axis current and is a function of $\theta_e$, $i_q$ denotes a quadrature-axis current and is a function of $\theta_e$, $\lambda_m$ denotes a flux linkage of a permanent magnet, $L_d$ denotes a direct-axis inductance, $L_q$ denotes a quadrature-axis inductance, $i_{max}$ denotes a maximum limit value of a phase current, and $\rho$ denotes a penalty coefficient. Specifically, in the second cost equation $J_2$, when $\rho$ is zero, it means not considering motor efficiency optimization; at this time, the torque output capability is the greatest under motor failure, while the phase current amplitude and effective value are the highest, and the motor efficiency is lower. When $\rho$ is greater than zero, it means considering the phase current amplitude and effective value (reducing copper consumption, and optimizing motor efficiency). The larger the value of $p$, the lower the motor phase current amplitude and effective value. The higher the motor efficiency, the lower the torque output capability. The specific value of $\rho$ can be determined based on the difference between the actual output torque of the motor and the reference torque, and the requirements of motor operating efficiency.

Optionally, the limiting condition for constructing the fault-tolerant control optimization model can be expressed as:

$$\begin{cases} i_d(\theta_e) \cos(\theta_e + \theta_1) - i_q(\theta_e) \sin(\theta_e + \theta_1) = 0 \\ \sqrt{i_d^2(\theta_e) + i_q^2(\theta_e)} \leq i_{max} \\ \sqrt{u_d^2(\theta_e) + u_q^2(\theta_e)} \leq u_{max} \end{cases} \qquad \text{(Equation 3)}$$

wherein $u_{max}$ denotes a maximum limit value of a phase voltage, $\theta_1$ is a preset value and depends on the fault phase determined in step S110. In other words, when it is determined that the fault phase is A phase, $\theta_1$ is zero; when it is determined that the fault phase if B phase, $\theta_1$ is $-\frac{2\pi}{3}$; when it is determined that the fault phase is C phase, $\theta_1$ is $+\frac{2\pi}{3}$. The above motor torque equation may use either inductance representation, or flux linkage representation.

It is to be noted here that the fault-tolerant control optimization model constructed based on the above-mentioned cost equation (i.e., the first cost equation $J_1$ or the second cost equation $J_2$) and the limiting condition (i.e., Equation 3) can reduce motor torque fluctuations and avoid the generation of unexpected reverse torque when the motor is in a fault state. For example, when the reference torque value is positive, no negative torque is generated; when the reference torque value is negative, no positive torque is generated.

Optionally, step S120 comprises: generating a first algorithm model based on a cost equation (i.e., the first cost

equation $J_1$ or the second cost equation $J_2$) and a limiting condition consisting of a fault phase current equation. In one example, if the cost equation is the first cost equation $J_1$, in consideration of a condition that the difference between the motor torque output and the torque reference is minimal, the first algorithm model satisfies the following equation:

$$\begin{cases} i_d(\theta_e)\cos(\theta_e + \theta_1) - i_q(\theta_e)\sin(\theta_e + \theta_1) = 0 \\ \left(T_{ref} - \frac{3}{2}N_p i_q(\theta_e)\left[\lambda_m + i_d(\theta_e)\left(L_d - L_q\right)\right]\right)^2 = 0 \end{cases} \quad \text{(Equation 4)}$$

In another example, if the cost equation is the second cost equation $J_2$, in consideration of a condition that the difference between the motor torque output and the torque reference is minimal, the first algorithm model satisfies the following equation:

$$\begin{cases} i_d(\theta_e)\cos(\theta_e + \theta_1) - i_q(\theta_e)\sin(\theta_e + \theta_1) = 0 \\ \dfrac{\left(T_{ref} - \frac{3}{2}N_p i_q(\theta_e)\left[\lambda_m + i_d(\theta_e)(L_d - L_q)\right]\right)^2}{T_{ref}^2} + \rho\dfrac{\left(i_d^2(\theta_e) + i_q^2(\theta_e)\right)}{i_{max}^2} = 0 \end{cases} \quad \text{(Equation 5)}$$

Optionally, step S120 further comprises: generating a second algorithm model based on a limiting condition consisting of a fault phase current equation and a motor phase current limiting equation. In one example, the second algorithm model constructed based on the limiting condition satisfies the following equation:

$$\begin{cases} i_d(\theta_e)\cos(\theta_e + \theta_1) - i_q(\theta_e)\sin(\theta_e + \theta_1) = 0 \\ \sqrt{i_d^2(\theta_e) + i_q^2(\theta_e)} = i_{max} \end{cases} \quad \text{(Equation 6)}$$

Optionally, step S120 further comprises: generating a third algorithm model based on a limiting condition consisting of the fault phase current equation and the motor phase voltage limiting equation. In one example, the third algorithm model constructed based on the limiting condition satisfies the following equation:

$$\begin{cases} i_d(\theta_e)\cos(\theta_e + \theta_1) - i_q(\theta_e)\sin(\theta_e + \theta_1) = 0 \\ \sqrt{\left(i_d(\theta_e)R_s - \omega_e L_q i_q(\theta_e)\right)^2 + \left[i_q(\theta_e)R_s + \omega_e(L_d i_d(\theta_e) + \lambda_m)\right]^2} = u_{max} \end{cases}$$

(Equation 7)

wherein $R_s$ denotes a motor winding resistance, and $\omega_e$ denotes a motor speed. The above motor phase voltage limiting equation may use either inductance representation, or flux linkage representation. If the winding resistance $R_s$ is ignored, the motor phase voltage limiting equation can be simplified. The simplified third algorithm model satisfies the following equation:

$$\begin{cases} i_d(\theta_e)\cos(\theta_e + \theta_1) - i_q(\theta_e)\sin(\theta_e + \theta_1) = 0 \\ \omega_e\sqrt{(L_d i_d(\theta_e) + \lambda_m)^2 + \left(L_q i_q(\theta_e)\right)^2} = u_{max} \end{cases} \quad \text{(Equation 8)}$$

Next, in step S130, a phase current reference value at a current motor rotor electrical angle is determined by using the fault-tolerant control optimization model. Optionally, a phase current reference value at a current motor rotor electrical angle can be determined based on the open-circuit fault type determined in step S110, using the first algorithm model, the second algorithm model or the third algorithm model.

Optionally, step S130 comprises: obtaining a current motor speed, torque reference value, motor rotor electrical angle, and maximum limit values of a phase voltage and a phase current.

Optionally, step S130 further comprises: determining, based on the open-circuit fault type, a range of the rotor electrical angle for fault-tolerant control. Optionally, in response to the open-circuit fault type being determined as the first fault type, the range of the rotor electrical angle for fault-tolerant control is determined as an entire cycle of the rotor electrical angle; and in response to the open-circuit fault type being determined as the second fault type, the range of the motor rotor electrical angle for fault-tolerant control is determined as half a cycle of the rotor electrical angle or an entire cycle of the rotor electrical angle.

In one example, if the fault phase determined in step S110 is A phase and the open-circuit fault type is the first fault type, the range of the rotor electrical angle for fault-tolerant control is $[0, 2\pi]$. In other words, in response to the open-circuit fault type being determined as the first fault type, a fault-tolerant control strategy is used within the entire range of the rotor electrical angle to obtain the phase current reference value.

In one example, if the fault phase is A phase and the open-circuit fault type is the second fault type, only half a range of the rotor electrical angle (for example, $[0, \pi]$ or $[\pi, 2\pi]$) can be considered as a fault state, and a fault-tolerant control strategy is used for this half range of the rotor electrical angle, and a non-fault state control strategy is used for the other half range of the rotor electrical angle (i.e., a non-fault state). Specifically, in this example, for one of the following cases of the second fault type, the range of the rotor electrical angle for fault-tolerant control is $[0, \pi]$ (i.e., when the rotor electrical angle is within $[0, \pi]$, the motor is considered to be in a fault state): the open-circuit fault occurs only in a switching element of a lower bridge arm (for example, $T_{A2}$); the open-circuit fault occurs only in a diode of an upper bridge arm (for example, $D_{A1}$); or the open-circuit fault occurs simultaneously in a switching element of a lower bridge arm and a diode of an upper bridge arm (for example, $T_{A2}$ and $D_{A1}$). Further, in this example, for one of the following cases of the second fault type, the range of the rotor electrical angle for fault-tolerant control is $[\pi, 2\pi]$ (i.e., when the rotor electrical angle is within $[\pi, 2\pi]$, the motor is considered to be in a fault state): the open-circuit fault occurs only in an switching element of an upper bridge arm (for example, $T_{A1}$), the open-circuit fault occurs only in a diode of a lower bridge arm (for example, $D_{A2}$), or the open-circuit fault occurs simultaneously in a switching element of an upper bridge arm and a diode of a lower bridge arm (for example, $T_{A1}$ and $D_{A2}$). In this way, the remaining healthy power components can be fully utilized for fault-tolerant control, thereby improving the torque output capability and reducing torque fluctuations under a motor open-circuit fault.

Alternatively, in another example, if the fault phase is A phase and the open-circuit fault type is the second fault type, the entire range of the rotor electrical angle $[0, 2\pi]$ can also be determined as the range of the rotor electrical angle for fault-tolerant control. In other words, in response to the open-circuit fault type being determined as the second fault type, a fault-tolerant control strategy can also be used within the entire range of the rotor electrical angle to obtain the phase current reference value. It can be understood that compared with using a fault-tolerant control strategy for only half a range of the rotor electrical angle and a non-fault state control strategy for the other half range of the rotor electrical angle, using the fault-tolerant control strategy for the second fault type within the entire range of the rotor electrical angle will correspondingly reduce the torque output capability of the system and increase the torque fluctuations.

It is to be further noted that the fault-tolerant control method 10 shown in FIG. 1 can be implemented under the condition of not determining the open-circuit fault type. For example, all possible open-circuit fault conditions can be classified into the first fault type, and the range of the rotor electrical angle for fault-tolerant control is determined as the entire cycle of the rotor electrical angle.

Optionally, step S130 further comprises: determining, based on the obtained current motor speed, torque reference value, motor rotor electrical angle, and maximum limit values of a phase voltage and a phase current, a phase current reference value at a current motor rotor electrical angle by using the fault-tolerant control optimization model, within the range of the rotor electrical angle for fault-tolerant control. Exemplarily, the process of determining the phase current reference value includes steps S131-S134.

In step S131, the first phase current reference value is determined by using the first algorithm model, based on the obtained torque reference value and motor rotor electrical angle. Exemplarily, the obtained torque reference value, motor rotor electrical angle, and flux linkage of the permanent magnet are substituted into the first algorithm model shown in Equation 4 or Equation 5 to yield a first direct-axis current reference value $i_{d1}$ and a first quadrature-axis current reference value $i_{q1}$ at the present rotor electrical angle. Exemplarily, the Newton-Raphson method can be used to solve the first algorithm model shown in Equation 4, as follows:

The fault phase current equation is substituted into the motor torque equation to yield the following equation:

$$T_{ref} - \frac{3}{2} N_p i_d \cot(\theta_e + \theta_1) \left[\lambda_m + i_d (L_d - L_q)\right] = 0 \qquad \text{(Equation 9)}$$

Based on the above Equation 9, the following cost equation is constructed:

$$f = \left\{ T_{ref} - \frac{3}{2} N_p i_d \cot(\theta_e + \theta_1) \left[\lambda_m + i_d (L_d - L_q)\right] \right\}^2 \qquad \text{(Equation 10)}$$

In other words, solving the first algorithm model is transformed into solving the minimum value of the cost equation $f$. Next, the Jacobian matrix J and the Hessian matrix H of the cost equation $f$ are calculated with respect to $i_d$:

$$J = \frac{df(i_d)}{di_d} \qquad \text{(Equation 11)}$$

$$H = \frac{df^2(i_d)}{d^2 i_d} \qquad \text{(Equation 12)}$$

Finally, the above matrices are substituted into the iterative formula for the direct-axis current $i_d$ based on the Newton-Raphson method:

$$i_{d(k)} = i_{d(k-1)} - H^{-1} J \qquad \text{(Equation 13)}$$

It is to be noted that the above Newton-Raphson solving process is merely illustrative rather than restrictive; other numerical analysis methods or alternative approaches can also be used to determine the phase current reference value. Moreover, the same or similar method can be used to solve the first algorithm model shown in Equation 5, which is not repeated herein. It is to be further noted that, during the generation of the phase current reference value, motor nonlinear parameter values such as a flux linkage of a permanent magnet $\lambda_m$, a direct-axis inductance $L_d$, a quadrature-axis inductance $L_q$, and a motor winding resistance $R_s$ can be obtained through a lookup table method or an online estimation method.

In step S132, the current amplitude $i_{s1}$ and the voltage amplitude $u_{s1}$ under the first phase current reference value are calculated based on the first phase current reference value obtained in step S131, and they are compared with the maximum limit value $i_{max}$ of the phase current and the maximum limit value $u_{max}$ of the phase voltage, respectively.

In response to a current amplitude under the first phase current reference value is less than or equal to the maximum limit value of the phase current, and a voltage amplitude is less than or equal to the maximum limit value of the phase voltage (i.e., $i_{s1} \le i_{max}$ and $u_{s1} \le u_{max}$), the first phase current reference value (i.e., $i_{d1}$, and $i_{q1}$) is determined as the current phase current reference value. In response to a current amplitude under the first phase current reference value is greater than the maximum limit value of the phase current, and a voltage amplitude is less than or equal to the maximum limit value of the phase voltage (i.e., $i_{s1} > i_{max}$ and $u_{s1} \le u_{max}$), then proceed to step S133. If the voltage amplitude under the first phase current reference value is greater than the maximum limit value of the phase voltage (i.e., $u_{s1} > u_{max}$), then proceed to step S134.

In step S133, the current phase current reference value is determined by further using the second algorithm model. Exemplarily, the obtained motor rotor electrical angle is substituted into the second algorithm model shown in FIG. 6 to yield a second direct-axis current reference value $i_{d2}$ and a second quadrature-axis current reference value $i_{q2}$ at the current rotor electrical angle to serve as the current phase current reference value.

In step S134, the current phase current reference value is determined by using the third algorithm model. Exemplarily, the obtained motor rotor electrical angle, winding resistance of the alternating current motor, motor speed, and flux linkage of the permanent magnet are substituted into the third algorithm model shown in Equation 7 or 8 to yield a third direct-axis current reference value $i_{d3}$ and a third quadrature-axis current reference value $i_{q3}$ at the current rotor electrical angle to serve as the current phase current reference value.

Exemplarily, the Newton-Raphson method can also be used to solve the second and third algorithm models, and the specific solving process is not repeated herein. It is to be noted that the current phase current reference value obtained according to the above steps S131-S134 is only applicable to the range of the rotor electrical angle for fault-tolerant control as described above.

For the first fault type, the current phase current reference value obtained through steps S131-S134 may be applicable to the entire cycle of the rotor electrical angle. That is, the fault phase current within the entire cycle of the rotor electrical angle should satisfy the fault phase current equation.

For the second fault type, the current phase current reference value obtained through steps S131-S134 may only be applicable to half a cycle of the rotor electrical angle (for example, $[0, \pi]$ or $[\pi, 2\pi]$), and for the other half cycle of the rotor electrical angle, the remaining healthy power components in the faulty bridge arm can be fully utilized to achieve the same control effect as in a non-fault state. That is, the fault phase current in only half a cycle of the rotor electrical angle should satisfy the fault phase current equation. In the other half cycle of the rotor electrical angle, the phase current reference value can be obtained by using a non-fault state control strategy.

Alternatively, for the second fault type, the current phase current reference value obtained through steps S131-S134 may also be applicable to the entire cycle of the rotor electrical angle. That is, the fault phase current in the entire cycle of the rotor electrical angle should satisfy the fault phase current equation.

Optionally, the method 10 further comprises step S140: controlling the alternating current motor according to the determined current phase current reference value (for example, the above-mentioned $i_{d1}$ and $i_{q1}$, or $i_{d2}$ and $i_{q2}$, or $i_{d3}$ and

$i_{q3}$), within the range of the rotor electrical angle for fault-tolerant control; and in response to the open-circuit fault type being determined as the second fault type and the range of the rotor electrical angle for fault-tolerant control is half a cycle of the rotor electrical angle, controlling the alternating current motor according to the phase current reference value obtained under a non-fault state control strategy, within the other half cycle of the rotor electrical angle. Exemplarily, the above-mentioned phase current reference value can be obtained by online calculation in a motor controller, or by offline calculation based on preset motor parameters, preset working conditions and preset fault conditions, followed by a lookup table method.

The method 10 according to one or more embodiments of the present disclosure can be directly applied to existing alternating motor drive system products (i.e., standard three-phase full bridge inverters and three-phase alternating current motors) without changing the hardware structure of the motor and the inverter and without adding additional devices, thereby reducing the fault-tolerant control cost of the system, and also improving the iterability of the fault-tolerant control solution at the same time. Meanwhile, in some embodiments, the method 10 can make full use of the remaining healthy power components to implement fault-tolerant control, thereby improving the reliability of the electric drive system, and also improving the torque output capability under a motor open-circuit fault and reducing the motor torque loss caused by the fault at the same time. This is suitable for the full speed range of the electric drive system. Moreover, in some embodiments, the method 10 can also reduce the current peak value and effective value under fault, while meeting the torque output of the faulty motor, and reduce copper consumption of the electric drive system, thereby improving the system efficiency and stability. In addition, in some embodiments, the method 10 can reduce motor torque fluctuations and avoid the generation of unexpected reverse torque when the motor is in a fault state. For example, when the reference torque value is positive, no negative torque is generated; when the reference torque value is negative, no positive torque is generated.

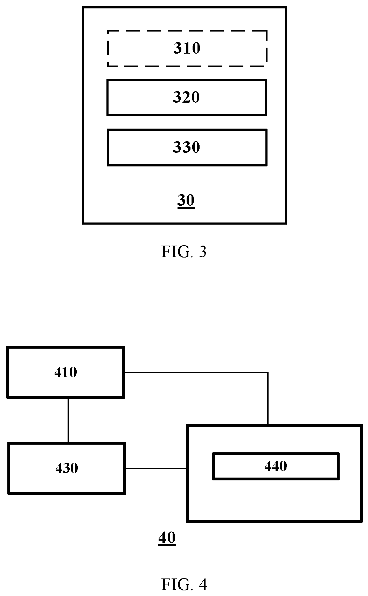

FIG. 3 is a block diagram of a fault-tolerant control apparatus 30 for an open-circuit fault in an alternating current motor according to one or more embodiments of the present disclosure. As shown in FIG. 3, the fault-tolerant control device 30 includes a model establishment module 320 and a current determination module 330. Optionally, the fault-tolerant control apparatus 30 further includes a fault determination module 310.

Optionally, the fault determination model 310 is configured to determine, based on fault state information of the inverter and windings of the alternating current motor, a fault phase and an open-circuit fault type of the alternating current motor, wherein the open-circuit fault type comprises a first fault type and a second fault type. For the process of determining the fault type, reference may be made to the above description of step S110, which is not repeated herein.

The model establishment module 320 is configured to construct a fault-tolerant control optimization model, in consideration of a condition that quadrature-axis current and direct-axis current of a motor change along with a motor rotor electrical angle, wherein the fault-tolerant control optimization model comprises a cost equation generated based on a motor torque equation and a limiting condition consisting of one or more of a fault phase current equation, a motor phase current limiting equation, and a motor phase voltage limiting equation. For the process of establishing the fault-tolerant control optimization model, reference may be made to the above description of step S120, which is not repeated herein.

The current determination model 330 is configured to determine a phase current reference value at a current motor rotor electrical angle by using the fault-tolerant control optimization model. For the process of determining the phase current reference value, reference may be made to the above description of step S130, which is not repeated herein.

Then, referring to FIG. 4, FIG. 4 is a block diagram of a computer device 40 according to one or more embodiments of the present disclosure.

As shown in FIG. 4, the computer device 40 includes a communication unit 410, a memory 420, a processor 430, and a computer program 440 stored on the memory 420 and executable on the processor 430.

The communication unit 410, as a communication interface, is configured to establish a communication connection between the computer device and an external device (e.g., a current controller and a motor sensor) or a network.

The memory 420 stores the computer program 440 executable by the processor 430. The processor 330 is configured to execute the computer program 440 to implement the method shown in FIG. 1.

According to a fourth aspect of the present disclosure, there is further provided a computer-readable storage medium having a computer program stored thereon, wherein when the program is executed by a processor, the method 10 shown in FIG. 1 is implemented. The computer-readable storage medium may include a random access memory (RAM) (such as a synchronous dynamic random access memory (SDRAM)), a read-only memory (ROM), a non-volatile random access memory (NVRAM), an electrically erasable programmable read-only memory (EEPROM), a flash memory, or another known storage medium etc.

Various embodiments provided in the present disclosure may be implemented by hardware, software, or a combination of hardware and software where applicable. In addition, without departing from the scope of the present disclosure, various hardware components and/or software components described herein may be combined into a composite component including software, hardware, and/or both where applicable. Without departing from the scope of the present disclosure, various hardware components and/or software components described herein may be separated into subcomponents including software, hardware, or both where applicable. In addition, where applicable, it is contemplated that software components can be implemented as hardware components, and vice versa.

Software (such as program code and/or data) in the present disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the present disclosure and specific applications thereof and thus enable those skilled in the art to implement and use the present disclosure. However, those skilled in the art will know that the above descriptions and examples are provided only for description and illustration. The proposed description is not intended to cover all aspects of the present disclosure or limit the present disclosure to the disclosed precise forms.

## Claims

1. A fault-tolerant control method for an open-circuit fault in an alternating current motor, wherein the alternating current motor is driven by an inverter, the method comprising the following steps:

   A. constructing a fault-tolerant control optimization model, in consideration of a condition that quadrature-axis current and direct-axis current of a motor change along with a motor rotor electrical angle, wherein the fault-tolerant control optimization model comprises a cost equation generated based on a motor torque equation and a limiting condition consisting of one or more of a fault phase current equation, a motor phase current limiting equation, and a motor phase voltage limiting equation; and

   B. determining a phase current reference value at a current motor rotor electrical angle by using the fault-tolerant control optimization model.

2. The method according to claim 1, further comprising:
   C. determining, based on fault state information of the alternating current motor and the inverter driving the alternating current motor, a fault phase and an open-circuit fault type of the alternating current motor, wherein the open-circuit fault type comprises a first fault type and a second fault type.

3. The method according to claim 2, wherein in step C, it is determined that the open-circuit fault type is the first fault type, in response to the fault state information indicating that the inverter has an open-circuit fault, and the inverter and windings of the alternating current motor as a whole only have a single-phase open-circuit fault, and a fault-phase bridge arm of the inverter satisfies one of the following conditions:

   the open-circuit fault occurs simultaneously in two switching elements of upper and lower bridge arms;
   the open-circuit fault occurs simultaneously in two diodes of upper and lower bridge arms;
   the open-circuit fault occurs simultaneously in a switching element and a diode of an upper bridge arm;
   the open-circuit fault occurs simultaneously in a switching element and a diode of a lower bridge arm; and
   a total number of switching elements and diodes in which the open-circuit fault occurs is more than two.

4. The method according to claim 2, wherein in step C, it is determined that the open-circuit fault type is the first fault type, in response to the fault state information indicating that windings of the alternating current motor has an open-circuit fault, and the inverter and the windings of the alternating current motor as a whole only have a single-phase open-circuit fault.

5. The method according to claim 2, wherein in step C, it is determined that the open-circuit fault type is the second fault type, in response to the fault state information indicating that windings of the alternating current motor has no fault, and only a single-phase bridge arm of the inverter has an open-circuit fault and satisfies one of the following conditions:

   a total number of switching elements and diodes in which the open-circuit fault occurs is one;
   the open-circuit fault occurs simultaneously in a switching element of an upper bridge arm and a diode of a lower bridge arm; and
   the open-circuit fault occurs simultaneously in a switching element of a lower bridge arm and a diode of an upper bridge arm.

6. The method according to claim 1, wherein the alternating current motor is a permanent magnet synchronous motor and the inverter is a three-phase full bridge inverter, the cost equation is a first cost equation $J_1$ or a second cost equation $J_2$, wherein

$$J_1 = \left(T_{ref} - \frac{3}{2}N_p i_q(\theta_e)\left[\lambda_m + i_d(\theta_e)(L_d - L_q)\right]\right)^2$$

$$J_2 = \frac{\left(T_{ref} - \frac{3}{2}N_p i_q(\theta_e)\left[\lambda_m + i_d(\theta_e)(L_d - L_q)\right]\right)^2}{T_{ref}^2} + \rho\frac{\left(i_d^2(\theta_e) + i_q^2(\theta_e)\right)}{i_{max}^2}$$

wherein $T_{ref}$ denotes a torque reference value, $N_p$ denotes a number of pole pairs of the motor, $\theta_e$ denotes a motor rotor electrical angle, $i_d$ denotes a direct-axis current and is a function of $\theta_e$, $i_q$ denotes a quadrature-axis current and is a function of $\theta_e$, $\lambda_m$ denotes a flux linkage of a permanent magnet, $L_d$ denotes a direct-axis inductance, $L_q$ denotes a quadrature-axis inductance, $i_{max}$ denotes a maximum limit value of a phase current, $\rho$ denotes a penalty coefficient and depends on motor operating efficiency.

7. The method according to claim 1, wherein step A further comprises:

A1. generating a first algorithm model based on the cost equation and a limiting condition consisting of the fault phase current equation;
A2. generating a second algorithm model based on a limiting condition consisting of the fault phase current equation and the motor phase current limiting equation; and
A3. generating a third algorithm model based on a limiting condition consisting of the fault phase current equation and the motor phase voltage limiting equation.

8. The method according to claim 7, the alternating current motor is a permanent magnet synchronous motor and the inverter is a three-phase full bridge inverter, the first algorithm model satisfies the following equation:

$$\begin{cases} i_d(\theta_e)\cos(\theta_e + \theta_1) - i_q(\theta_e)\sin(\theta_e + \theta_1) = 0 \\ \left(T_{ref} - \frac{3}{2}N_p i_q(\theta_e)\left[\lambda_m + i_d(\theta_e)(L_d - L_q)\right]\right)^2 = 0 \end{cases}$$

wherein $\theta_e$ denotes a motor rotor electrical angle, $i_d$ denotes a direct-axis current and is a function of $\theta_e$, $i_q$ denotes a quadrature-axis current and is a function of $\theta_e$, $T_{ref}$ denotes a torque reference value, $N_p$ denotes a number of pole pairs of the motor, $\lambda_m$ denotes a flux linkage of a permanent magnet, $L_d$ denotes a direct-axis inductance, $L_q$ denotes a quadrature-axis inductance, $\theta_1$ is a preset value and depends on a fault phase.

9. The method according to claim 7, the alternating current motor is a permanent magnet synchronous motor and the inverter is a three-phase full bridge inverter, the first algorithm model satisfies the following equation:

$$\begin{cases} i_d(\theta_e)\cos(\theta_e + \theta_1) - i_q(\theta_e)\sin(\theta_e + \theta_1) = 0 \\ \frac{\left(T_{ref} - \frac{3}{2}N_p i_q(\theta_e)\left[\lambda_m + i_d(\theta_e)(L_d - L_q)\right]\right)^2}{T_{ref}^2} + \rho\frac{\left(i_d^2(\theta_e) + i_q^2(\theta_e)\right)}{i_{max}^2} = 0 \end{cases}$$

wherein $\theta_e$ denotes a motor rotor electrical angle, $i_d$ denotes a direct-axis current and is a function of $\theta_e$, $i_q$ denotes a quadrature-axis current and is a function of $\theta_e$, $T_{ref}$ denotes a torque reference value, $N_p$ denotes a number of pole pairs of the motor, $\lambda_m$ denotes a flux linkage of a permanent magnet, $L_d$ denotes a direct-axis inductance, $L_q$ denotes a quadrature-axis inductance, $\theta_1$ is a preset value and depends on a fault phase, $i_{max}$ denotes a maximum limit value of a phase current, $\rho$ denotes a penalty coefficient and depends on motor operating efficiency.

**10.** The method according to claim 2, wherein step B comprises:

B1. obtaining a current motor speed, torque reference value, motor rotor electrical angle, and maximum limit values of a phase voltage and a phase current;

B2. determining, based on the open-circuit fault type, a range of the rotor electrical angle for fault-tolerant control; and

B3. determining, based on the current motor speed, torque reference value, motor rotor electrical angle, and maximum limit values of a phase voltage and a phase current, a phase current reference value at a current motor rotor electrical angle by using the fault-tolerant control optimization model, within the range of the rotor electrical angle for fault-tolerant control.

**11.** The method according to claim 10, wherein step B2 comprises:

in response to the open-circuit fault type being determined as the first fault type, determining the range of the motor rotor electrical angle for fault-tolerant control as an entire cycle of the rotor electrical angle; and

in response to the open-circuit fault type being determined as the second fault type, determining the range of the motor rotor electrical angle for fault-tolerant control as half a cycle of the rotor electrical angle or an entire cycle of the rotor electrical angle.

**12.** The method according to claim 10, wherein step B3 comprises:

determining, based on the torque reference value and the motor rotor electrical angle, a first phase current reference value using a first algorithm model;

in response to a current amplitude under the first phase current reference value being less than or equal to the maximum limit value of the phase current, and a voltage amplitude under the first phase current reference value being less than or equal to the maximum limit value of the phase voltage, determining the first phase current reference value as the current phase current reference value;

in response to a current amplitude under the first phase current reference value being greater than the maximum limit value of the phase current, and a voltage amplitude under the first phase current reference value being less than or equal to the maximum limit value of the phase voltage, determining the current phase current reference value using a second algorithm model; and

in response to the voltage amplitude being greater than the maximum limit value of the phase voltage, determining the current phase current reference value using a third algorithm model.

**13.** The method according to claim 1, further comprising one or more of the following steps:

D. controlling the alternating current motor according to the determined phase current reference value, within a range of the rotor electrical angle for fault-tolerant control; and

E. in response to the open-circuit fault type being determined as the second fault type and the range of the rotor electrical angle for fault-tolerant control is half a cycle of the rotor electrical angle, controlling the alternating current motor according to the phase current reference value obtained under a non-fault state control strategy, within the other half cycle of the rotor electrical angle.

**14.** A fault-tolerant control apparatus for an open-circuit fault in an alternating current motor, wherein the alternating current motor is driven by an inverter, the fault-tolerant control apparatus comprising:

a model establishment module configured to construct a fault-tolerant control optimization model, in consideration of a condition that quadrature-axis current and direct-axis current of a motor change along with a motor rotor electrical angle, wherein the fault-tolerant control optimization model comprises a cost equation generated based on a motor torque equation and a limiting condition consisting of one or more of a fault phase current equation, a motor phase current limiting equation, and a motor phase voltage limiting equation; and

a current determination module configured to determine a phase current reference value at a current motor rotor electrical angle by using the fault-tolerant control optimization model.

**15.** The apparatus according to claim 14, further comprising:

a fault determination module configured to determine, based on fault state information of the alternating current motor and the inverter for driving the alternating current motor, a fault phase and an open-circuit fault type of the alternating current motor, wherein the open-circuit fault type comprises a first fault type and a second fault type.

**16.** A computer device, comprising: a memory; a processor; and a computer program stored on the memory and executable on the processor, wherein the computer program is executed to enable the method according to any one of claims 1 to 13 to be performed.

**17.** A computer storage medium comprising instructions, wherein when the instructions are run, the method according to any one of claims 1 to 13 is performed.

FIG. 1

FIG. 2

FIG. 3

FIG. 4

## INTERNATIONAL SEARCH REPORT

| International application No. |
|---|
| **PCT/CN2023/104870** |

**A. CLASSIFICATION OF SUBJECT MATTER**

H02P29/028(2016.01)i; H02P27/06(2006.01)i; H02M1/088(2006.01)i; H02P29/024(2016.01)i

According to International Patent Classification (IPC) or to both national classification and IPC

**B. FIELDS SEARCHED**

Minimum documentation searched (classification system followed by classification symbols)

H02P H02M

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI, IEEE: 电机, 三相, 多相, 开路, 断路, 断相, 容错, 故障类型, 诊断, 铜损, 转矩, 扭矩, 脉动, 价值, 目标, 代价, 方程, 函数, motor, three-phase, multi-phase, open-circuit, fault-tolerant, fault type, diagnose, copper loss, torque, ripple, cost function

**C. DOCUMENTS CONSIDERED TO BE RELEVANT**

| Category* | Citation of document, with indication, where appropriate, of the relevant passages | Relevant to claim No. |
|---|---|---|
| PX | CN 115347849 A (NIO POWER TECHNOLOGY (HEFEI) CO., LTD.) 15 November 2022 (2022-11-15)<br>description, paragraphs 42-105, and figures 1-4 | 1-17, |
| X | 余文涛等 (YU, Wentao et al.). "永磁容错电机最优转矩控制策略实验 (Experimental Study on Optimal Torque Control of Fault Tolerant Permanent Magnet Motor)"<br>航空学报 (Acta Aeronautica et Astronautic Sinica),<br>Vol. 31, No. 8, 31 August 2010 (2010-08-31),<br>pp. 1624-1626, sections 2-3, and figure 4 | 1, 6, 7, 14, 16, 17 |
| Y | 余文涛等 (YU, Wentao et al.). "永磁容错电机最优转矩控制策略实验 (Experimental Study on Optimal Torque Control of Fault Tolerant Permanent Magnet Motor)"<br>航空学报 (Acta Aeronautica et Astronautic Sinica),<br>Vol. 31, No. 8, 31 August 2010 (2010-08-31),<br>pp. 1624-1626, sections 2-3, and figure 4 | 2-5,15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2023** | **26 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 580 040 A1**

**INTERNATIONAL SEARCH REPORT**

| International application No. |
|---|
| **PCT/CN2023/104870** |

**C.      DOCUMENTS CONSIDERED TO BE RELEVANT**

| Category* | Citation of document, with indication, where appropriate, of the relevant passages | Relevant to claim No. |
|---|---|---|
| Y | 崔博文等 (CUI, Bowen et al.). "基于傅里叶变换和神经网络的逆变器故障检测与诊断 (Fault Detection and Isolation of Inverter Based on FFT and Neural Network)" 电工技术学报 (Transactions of China Electrotechnical Society), Vol. 21, No. 7, 31 July 2006 (2006-07-31), p. 38, section 2, and pp. 40-41, section 6 | 2-5, 15 |
| A | CN 112332735 A (JIANGSU UNIVERSITY) 05 February 2021 (2021-02-05) entire document | 1-17 |
| A | CN 113872482 A (NANTONG UNIVERSITY) 31 December 2021 (2021-12-31) entire document | 1-17 |
| A | WO 2019136784 A1 (JIANGSU UNIVERSITY) 18 July 2019 (2019-07-18) entire document | 1-17 |
| A | US 2021384863 A1 (DENSO CORP.) 09 December 2021 (2021-12-09) entire document | 1-17 |

Form PCT/ISA/210 (second sheet) (July 2022)

19

**INTERNATIONAL SEARCH REPORT**
Information on patent family members

International application No.

**PCT/CN2023/104870**

| Patent document cited in search report | | | Publication date (day/month/year) | Patent family member(s) | | | Publication date (day/month/year) |
|---|---|---|---|---|---|---|---|
| CN | 115347849 | A | 15 November 2022 | None | | | |
| CN | 112332735 | A | 05 February 2021 | CN | 112332735 | B | 21 June 2022 |
| CN | 113872482 | A | 31 December 2021 | CN | 113872482 | B | 26 July 2022 |
| WO | 2019136784 | A1 | 18 July 2019 | GB | 201911100 | D0 | 18 September 2019 |
| | | | | GB | 2573913 | A | 20 November 2019 |
| | | | | GB | 2573913 | B | 04 March 2020 |
| | | | | US | 2021067077 | A1 | 04 March 2021 |
| | | | | US | 11159113 | B2 | 26 October 2021 |
| | | | | CN | 108306571 | A | 20 July 2018 |
| | | | | CN | 108306571 | B | 31 December 2019 |
| US | 2021384863 | A1 | 09 December 2021 | US | 11711045 | B2 | 25 July 2023 |
| | | | | JP | 2020137408 | A | 31 August 2020 |
| | | | | WO | 2020170983 | A1 | 27 August 2020 |
| | | | | CN | 113491063 | A | 08 October 2021 |

Form PCT/ISA/210 (patent family annex) (July 2022)